(19) Europäisches Patentamt
European Patent Office
Office européen des brevets

(11) **EP 3 786 700 A1**

(12) **EUROPEAN PATENT APPLICATION**

(43) Date of publication:
**03.03.2021 Bulletin 2021/09**

(51) Int Cl.:
***G02F 1/35*** (2006.01)  ***G02F 1/365*** (2006.01)

(21) Application number: **19194369.5**

(22) Date of filing: **29.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ASML Netherlands B.V.**
**5500 AH Veldhoven (NL)**

(72) Inventors:
- UEBEL, Patrick Sebastian
  **5500 AH Veldhoven (NL)**
- BAUERSCHMIDT, Sebastian Thomas
  **5500 AH Veldhoven (NL)**
- GÖTZ, Peter Maximilian
  **5500 AH Veldhoven (NL)**

(74) Representative: **ASML Netherlands B.V.**
**Corporate Intellectual Property**
**P.O. Box 324**
**5500 AH Veldhoven (NL)**

(54) **END FACET PROTECTION FOR A LIGHT SOURCE AND A METHOD FOR USE IN METROLOGY APPLICATIONS**

(57)    A system and method for providing a light source is disclosed. In one arrangement, the light source comprises a gas cell having a window, an optical fiber that is hollow and has an axial direction, an end thereof being enclosed within the gas cell and optically coupled to the window via an optical path, and a shield, disposed around the end of the optical fiber, and extending past the end of the optical fiber in the axial direction towards the window so as to limit the exchange of gas between the optical path and the remainder of the gas cell.

## Fig. 7

EP 3 786 700 A1

**Description**

<u>Field</u>

The present invention relates to a light source and a method for operating the light source, in particular, a broadband light source for use in a lithographic apparatus or metrology tools.

<u>Background</u>

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-$k_1$ lithography may be used to process features with dimensions smaller than the classical resolution limit of a lithographic apparatus. In such process, the resolution formula may be expressed as CD = $k_1 \times \lambda$/NA, where $\lambda$ is the wavelength of radiation employed, NA is the numerical aperture of the projection optics in the lithographic apparatus, CD is the "critical dimension" (generally the smallest feature size printed, but in this case half-pitch) and $k_1$ is an empirical resolution factor. In general, the smaller $k_1$ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low $k_1$.

A metrology apparatus can be used to measure parameters of interest of structures on the substrate. For example, a metrology apparatus can be used to measure parameters such as critical dimension, overlay between layers on the substrate and asymmetry of a pattern on the substrate. Rays of measurement radiation are used to illuminate the substrate. The radiation is diffracted by the structure on the substrate. The diffracted radiation is collected by an objective lens and captured by a sensor.

The rays of measurement radiation are provided by light emitted by a light source. This light is directed onto the substrate via a beam splitter and the objective lens that collects the diffracted radiation from the substrate.

The light source providing measurement radiation may be a broadband light source. The broadband light source may be generated using a gas-filled optical fiber. A laser source may be coupled to the input of the optical fiber of the light source, and be spectrally broadened in the optical fiber.

<u>Summary</u>

It is desirable, for example, to provide a broadband light source that has an increased operable lifetime. In particular, it is desirable to provide a broadband light source comprising a hollow-core photonic crystal fiber (HC-PCF) that produces less contaminant material during operation.

According to a first aspect of the invention, there is provided a light source, comprising: a gas cell having a window; an optical fiber that is hollow, an end thereof being enclosed within the gas cell and optically coupled to the window via an optical path; a shield, disposed around and extending past the end of the optical fiber towards the window so as to limit the exchange of gas between the optical path and the remainder of the gas cell.

According to a second aspect of the invention, there is provided a metrology device comprising the light source of the first aspect of the invention, wherein the light source is configured to generate light for projection onto a substrate.

<u>Brief Description of the Drawings</u>

Embodiments of the invention will now be described, by way of example only, with reference to the accompanying schematic drawings, in which:

- Figure 1 depicts a schematic overview of lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4A and 4B depict a schematic block diagram of an alignment sensor, and a level sensor respectively;
- Figure 5 depicts a schematic of a HC-PCF based light source with a gas cell;
- Figure 6A depicts experimental results for the average output power of a HC-PCF based light source against total operation time, figure 6B depicts a schematic example of the end of a HC-PCF with a contamination growth;
- Figure 7 depicts an embodiment of a light source according to the present invention;
- Figure 8 depicts another embodiment of a light source according to the present invention.

Detailed Description

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

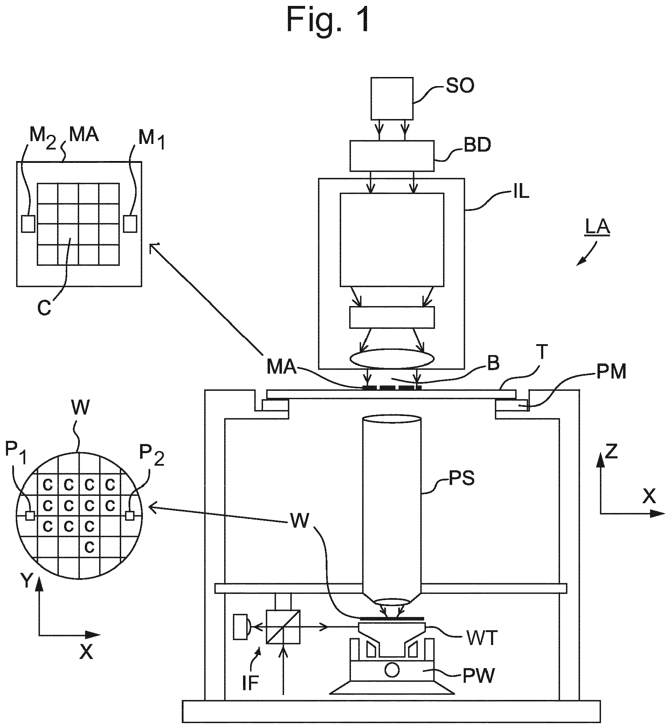

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C.

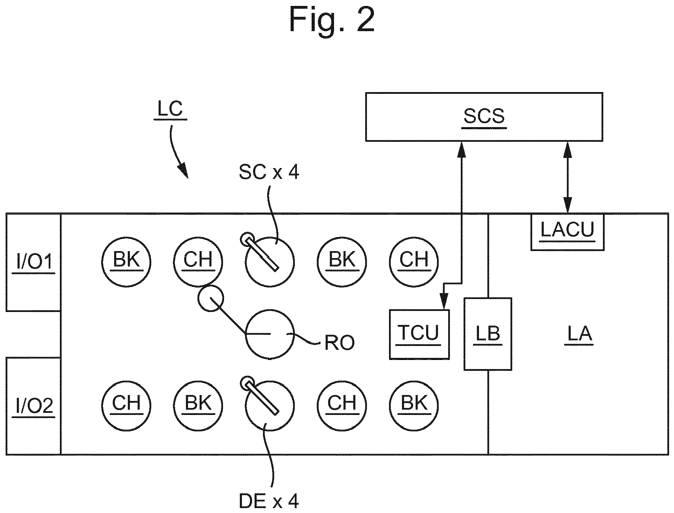

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

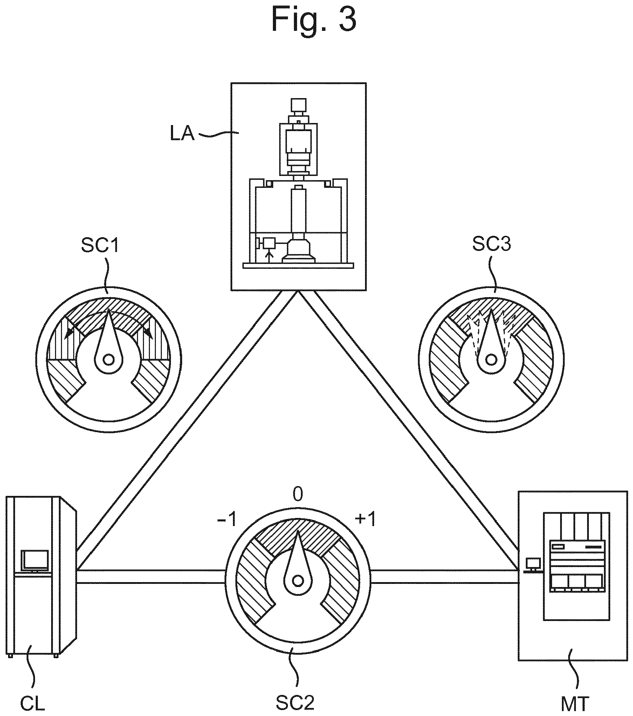

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Different types of metrology apparatus MT for making such measurements are known, including scanning electron microscopes or various forms of scatterometer metrology apparatus MT.

Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from the light source of the present invention.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1 incorporated herein by reference in its entirety. The light source of the present invention may be configured to be controllable in respect to the light source requirements of these substrate measurement recipes.

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

A mark, or alignment mark, may comprise a series of bars formed on or in a layer provided on the substrate or formed (directly) in the substrate. The bars may be regularly spaced and act as grating lines so that the mark can be regarded as a diffraction grating with a well-known spatial period (pitch). Depending on the orientation of these grating lines, a mark may be designed to allow measurement of a position along the X axis, or along the Y axis (which is oriented substantially perpendicular to the X axis). A mark comprising bars that are arranged at +45 degrees and/or -45 degrees with respect to both the X- and Y-axes allows for a combined X- and Y- measurement using techniques as described in US2009/195768A, which is incorporated by reference.

The alignment sensor scans each mark optically with a spot of radiation to obtain a periodically varying signal, such as a sine wave. The phase of this signal is analyzed, to determine the position of the mark and, hence, of the substrate relative to the alignment sensor, which, in turn, is fixated relative to a reference frame of a lithographic apparatus. So-called coarse and fine marks may be provided, related to different (coarse and fine) mark dimensions, so that the alignment sensor can distinguish between different cycles of the periodic signal, as well as the exact position (phase) within a cycle. Marks of different pitches may also be used for this purpose.

Measuring the position of the marks may also provide information on a deformation of the substrate on which the marks are provided, for example in the form of a wafer grid. Deformation of the substrate may occur by, for example, electrostatic clamping of the substrate to the substrate table and/or heating of the substrate when the substrate is exposed to radiation.

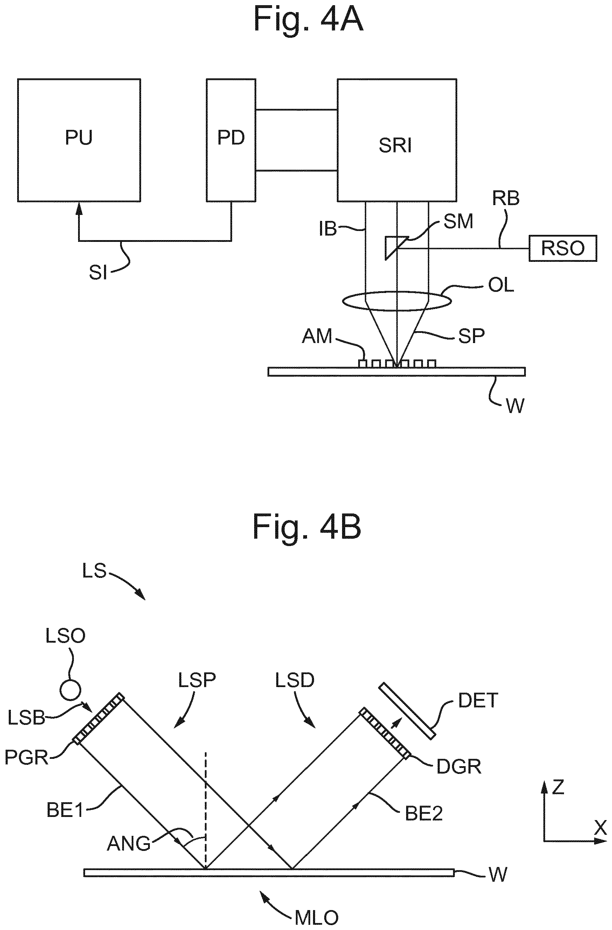

Figure 4A is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The radiation source RSO may be provided by the light source of the present invention. The illumination spot SP, by which the mark AM is illuminated, may be slightly smaller in diameter than the width of the mark itself.

Radiation diffracted by the mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

A topography measurement system, level sensor or height sensor, and which may be integrated in the lithographic apparatus, is arranged to measure a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

An example of a level or height sensor LS as known in the art is schematically shown in Figure 4B, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may comprise the light source of the present invention.

The present disclosure is directed towards improving the operable lifetime of a light source, in particular, the operable lifetime of a broadband light source comprising a hollow-core photonic crystal fiber (HC-PCF). The broadband light source of the present disclosure may be used in metrology tools such as scatterometers alignment sensors, height or level sensors as described above.

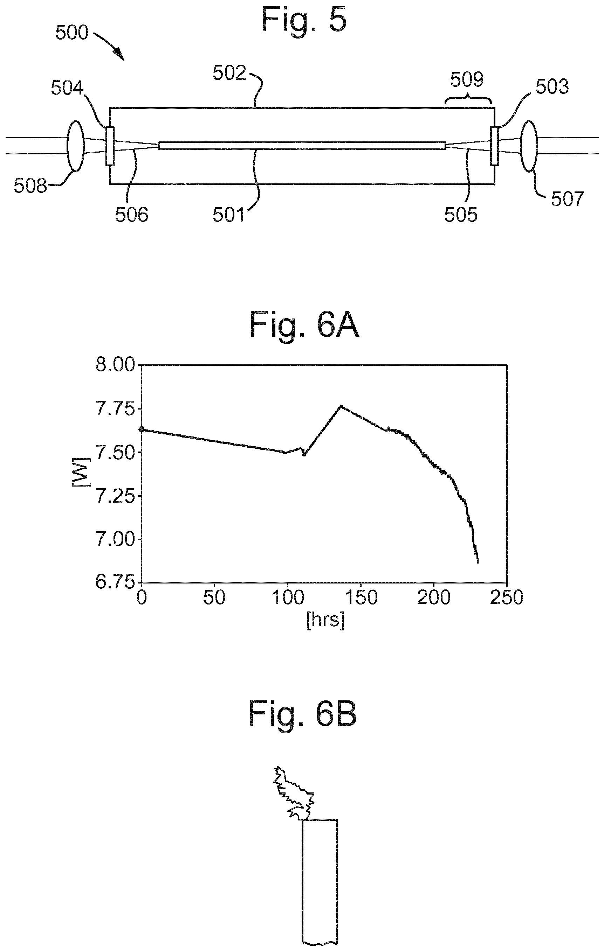

Figure 5 shows an example of a broadband light source apparatus comprising a HC-PCF. The light source 500 may comprise a gas cell 502 with an HC-PCF 501 embedded therein. Each of the two ends of the HC-PCF 501 may be optically coupled to a window 503/504, through which the input and output beams travel.

An input source such as a pump laser enters the light source through input window 503. The beam of input light 506 is converged and enters the HC-PCF 501. The spectrum of the beam is broadened as it travels through the HC-PCF 501, yielding a broadband output beam 505.

A gap 509 is provided between the end facets of the HC-PCF and the windows to prevent dielectric breakdown of the windows, especially the output window. As shown in Figure 5, broadband beam segment 505 diverges as it exits the HC-PCF output facet, such that the intensity of the beam once it reaches output window 503 is lower. Accordingly, the intensity of the beam impinging on the output window 503 is lower than the intensity threshold for dielectric breakdown of the window.

When operating a HC-PCF based light source, such as the light source 500, contaminants grow on the end facets of the HC-PCF over time. In particular, the present inventors have observed that contamination growths develop predominantly on the output facet of a HC-PCF. The growth of contamination appears to occur where the intensity of the light is highest, in particular, contamination growth is higher at the output facet of the HC-PCF than at the output window. Growth of contamination also appears to occur where the light has been spectrally broadened, in particular, contaminations do not grow as strongly on the input facet. In addition, contaminations are predominantly observed on the output facet of the of the HC-PCF, and not inside the HC-PCF itself.

The exact source of the contaminants is not known, however it is believed that contaminants may arise from organic materials in the gas cell environment, such as from remaining residuals of the fiber polymer coating, from lubricants of the pneumatic components, from the gas cell fabrication process, or from the working gas used in the gas cell. The contaminants may develop due to silica particles being ablated from the windows of the gas cell, or from the HC-PCF. Contaminants may undergo a photo-induced process with the broadened output light from the PCF and change their chemical structure and/or crystallize on the output facet.

The buildup of these contaminants results in a decreased lifetime of the light source. Contamination growths at the output facet can protrude into the optical path of the diverging beam. This causes scattering of the output light and thus leads to the decay of output power of the light source.

Figure 6A shows the inventor's own experimental results of the average output power of an HC-PCF over total operational time. After about 180 hours, the average output power of the HC-PCF begins to decay from over 7.50 watts to under 7.00 watts.

Figure 6B shows a schematic example of a contamination growth at the output end facet of a HC-PCF after an extended period of operation.

To reduce these contamination growths and prolong the operational lifetime of an HC-PCF light source, it may be desirable to reduce the concentration of contaminants in the light source apparatus. Possible techniques for reducing the concentration of contaminants include rigorous cleaning of the gas environment prior to use in the light source. However, it is challenging to achieve sufficient cleaning of a gas source with known cleaning methods, and not all contaminants can be avoided.

To reduce the contamination growths on the end facets of the HC-PCF, the capillaries of the HCF-PCF may be collapsed. Tapered ends of capillaries may prevent the contamination growths from occurring. However, this solution does not address the underlying problem of contaminants in the apparatus, and contamination growth cannot be fully avoided, particularly if the taper in the capillaries is not perfect.

Another problem in HC-PCF/gas cell light sources identified by the inventors is turbulent gas flow in the gas cell. HC-PCF/gas cell light source designs can operate at dimensions and pressures which yield a Reynolds number of $Re > 10^7$, meaning the system is highly prone to turbulent flow. Turbulences can introduce density inhomogeneities in the gas which result in dynamic changes in the optical path length of the input or output beam. This may cause the output light to flicker. This variability in the light source makes it unreliable, in particular for metrology applications where a consistent light output from a source is important.

In particular, turbulent gas flows in the gaps between the HC-PCF end facets and the windows to which they are coupled may also cause additional problems. A more turbulent flow increases the rate at which gas traverses the path of the input/output beams 505/506, and also increases the rate at which the gas in the input/output beams 505/506 is exchanged with the rest of the gas in the gas cell. Therefore, in the case that contamination growths are caused by some photo-induced process, a more turbulent flow will increase the rate at which contaminating particles cross the path of a beam, and thus increase the rate at which contaminants are able to crystallize or otherwise accumulate in the apparatus.

The present inventors have developed an apparatus to prevent or delay the rate of contamination growth on an HC-PCF in a broadband light source. The present disclosure provides a shield for minimizing the gas volume that comes into contact with the beam of the light source while it is operating.

In view of the above problems in HC-PCF light sources, the shield may perform any combination of the following structural roles: to minimize a first gas volume between a facet end of a HC-PCF and the window to which it is optically coupled; to restrict the rate of gas exchange between this first volume and the remainder of the gas cell; to reduce turbulence in this first volume, or in the gas cell generally.

The light source of an embodiment may comprise a gas cell having a window; an optical fiber that is hollow and having an axial direction, an end thereof being enclosed within the gas cell and optically coupled to the window via an optical path; and a shield, disposed around the end of the optical fiber, and extending past the end of the optical fiber in the axial direction towards the window so as to limit the exchange of gas between the optical path and the remainder of the gas cell.

The gas cell may have a window on one of its axial ends. The gas cell may comprise two windows, each disposed on an axial end. The walls of the gas cell may comprise metal.

The optical fiber may be an HC-PCF. Only the output end of the optical fiber may be contained within the gas cell. Alternatively, the entirety of the optical fiber may be contained within the gas cell. The optical fiber may comprise a second end, the second end also being optically coupled to a second window of the gas cell.

The shield of the light source may extend along the optical fiber for a given length, wherein the inner surface of the shield is offset from the circumference of the optical fiber forming a gap.

This gap between the optical fiber and the inner surface of the shield may be considered a "radial gap". The radial gap may be rotationally symmetric with respect to the axial direction. The radial gap may be shaped as a cylindrical shell. The radial gap may have a non-uniform shape. The radial gap may be the primary route through which gas can flow to the optical path from the remainder of the gas cell. The radial gap may be one of multiple gaps allowing gas flow to the optical path. The size of the radial gap may be configured to achieve a certain rate of gas exchange therethrough. The size of the radial gap may limit gas exchange therethrough to no more than $10^{-1}$ mol/hour, preferably no more than $10^{-4}$ mol/hour, preferably no more than $10^{-7}$ mol/hour, preferably no more than $10^{-10}$ mol/hour.

The light source may have a gap between the optical fiber and the shield that has a minimum cross-sectional area normal to the axial direction between 100 $\mu m^2$ and 3 $mm^2$. In other words, the inner surface of the shield may not completely conform to the outer surface of the optical fiber.

The inner surface of the shield surrounding the optical fiber may not contact the fiber at any point. Alternatively, the inner surface of the shield surrounding the optical fiber may contact the fiber at one or more points. Support members may be formed from the inner surface of the shield and be configured to support or mount the optical fiber in a particular position. Support members for the optical fiber may be provided by a structure other than the shield.

The light source may comprise a shield that abuts or is sealed to the optical fiber.

The shield may be sealed to the optical fiber with soldering, welding or a low outgassing glue.

The light source may comprise a shield, wherein the an end of the shield abuts or is sealed with the window, or the gas cell surface containing the window.

The shield may comprise silica. The end of the shield may be sealed to the window with glass-to-glass soldering or laser welding. The shield may be sealed to the gas cell using laser welding. The shield and the window to which it is sealed may be manufactured as a single piece, or be otherwise integrally formed. The single-piece shield and window may be manufactured using subtractive manufacturing, optionally selective laser etching. The single-piece shield and window may comprise silica.

The end of the shield and the window or gas cell surface may be separated by a small gap. This gap between the end of the shied and the window or gas cell surface may be considered an "axial gap". The axial gap may be the primary route through which gas can flow to the optical path from the remainder of the gas cell. The axial gap may be one of multiple gaps allowing gas flow to the optical path. The size of the gap may be configured to achieve a certain rate of gas exchange therethrough. The size of the axial gap may limit gas exchange therethrough to no more than $10^{-1}$ mol/hour, preferably no more than $10^{-4}$ mol/hour, preferably no more than $10^{-7}$ mol/hour, preferably no more than $10^{-10}$ mol/hour.

The light source may comprise a shield disposed on the output end of the optical fiber.

The light source may comprise a shield disposed on the input end of the optical fiber. The light source may comprise two shields, one on each of the input and output end of the optical fiber.

The shield of the light source may comprise silica, a metal, silicon, or other semiconductor.

The shield may of the light source may comprise a mixture of materials.

The shield of the light source may have a non-constant wall thickness.

The wall of the shield may be thicker at the axial end surrounding the optical fiber. The wall of the shield may be thicker at points to alter the gas flow in the remainder of the gas cell. The wall of the shield may be thicker where support members are provided by the inner surface of the shield to hold the optical fiber. The wall of the shield may be thicker where external support members are provided by the outer surface of the shield to structurally support the shield within the gas cell. One or more external support members may be provided by parts separate from the shield, to hold or position the shield in the gas cell.

The light source may comprise a shield that is rotationally symmetric with respect to the axial direction.

The outer surface of the shield may define one of the following shapes: a cylinder, a frustro-cone or a horn.

The inner surface of the shield may define one of the following shapes: a cylinder, a frustro-cone or a horn.

Alternatively, the shield may not be rotationally symmetric. The outer and/or inner surface of the shield may describe non-rotationally symmetric shapes. The shield may comprise one or more support members formed from the inner or outer surface of the shield to mount or otherwise support the optical fiber or shield in a particular position within the gas cell. The inner and/or outer surface of the shield may comprise structural features to redirect gas flow, reduce turbulence and/or redirect turbulent flows away from the optical path. These structures may comprise structured/textured surfaces, fins or flow straighteners.

Structures external to the shield may be provided to reduce or redirect turbulent flow in the gas cell. These structures may comprise structured/textured surfaces, fins or flow straighteners.

The shield of the light source may have an inner surface with a non-constant inner diameter normal to the axial direction.

The inner diameter of the shield may be larger at the end of the shield adjacent the window. In other words, the cross section of the inner surface of the shield normal to the axial direction may be larger at the shield end adjacent the window, than at the shield end surrounding the optical fiber.

The inner diameter of the shield may gradually increase from a first smaller inner diameter surrounding the end of the optical fiber, to a larger inner diameter adjacent the window.

The inner diameter of the shield may be larger than the minimum diameter provided by the following equation:

$$D_{min} = w_0\sqrt{1 + (z/z_R)^2} \qquad (1)$$

where $w_0$ is the mode field diameter at the end of the optical fiber, $z$ is the distance from the end of the optical fiber, and $z_R$ is the Rayleigh Length.

The inner diameter of the shield may be the diameter provided by equation (1). In other words, the inner diameter of the shield may be substantially equal to the minimum diameter provided by equation (1).

Equation (1) is derived from the expected local beam diameter at a given distance from the output end of the optical fiber. Other equations estimating this beam diameter may be used to dimension the shield. It may be generally desirable for the inner surface of the shield to closely follow but not obstruct the output beam of the optical fiber. These principles for inner shield dimensions may also be applied to the input end of the optical fiber. The inner surface of a shield disposed around the input end of the optical fiber may closely follow but not obstruct the input beam received by the input end of the optical fiber.

The inner surface of the shield may define a frustro-conical shape.

The shield of the light source may have a constant cross section normal to the axial direction. In other words, the shield may have the shape of a prism. The shield may have the shape of a cylindrical shell, or other prism defining a hollow interior space.

The gas cell of the light source may comprise at least one gas selected from the group consisting of helium, neon, argon, krypton, xenon, hydrogen, oxygen, nitrogen, other molecular gases and mixtures thereof.

The light source may be coupled to an optical source, the optical source comprising a pump laser. The optical source may be coupled to the input end of the HC-PCF through a window.

The metrology apparatus of an embodiment comprises a light source according to the embodiments of the present disclosure, wherein the light source is configured to generate light for projection onto a substrate.

The metrology device may be a scatterometer.

The metrology device may be used in metrology applications such as overlay, alignment and/or leveling.

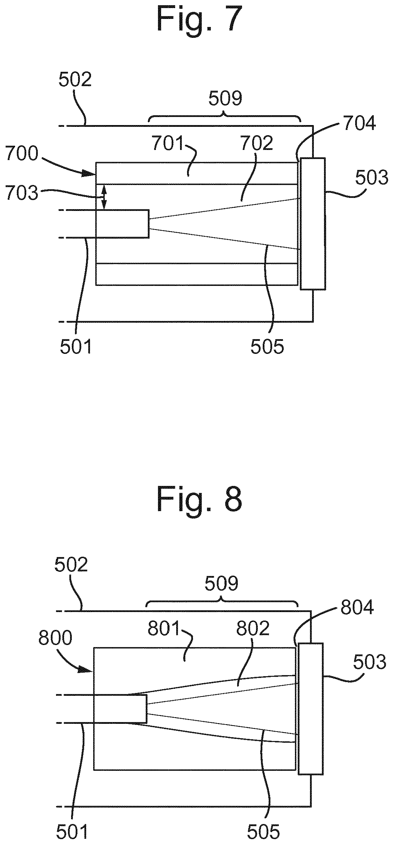

Figure 7 shows a configuration of the light source according to an embodiment of the invention. The light source comprises a gas cell 502 having a window 503, an optical fiber 501 optically coupled to the window 503 across a gap 509, and a shield 700. Output beam 505 is shown exiting the end of the optical fiber 501 and diverging as it travels to the window 503. The shield 700 is disposed around the end of the optical fiber 501, and extends in both axial directions, parallel to the optical fiber axis.

The shield in Figure 7 has the shape of a cylindrical shell. A cross-section of the shield has been taken along the axial direction, showing the wall material 701 and an inner void 702 of the shield. The end of the optical fiber is enclosed within the shield.

Shield 700 in Figure 7 is rotationally symmetric with respect to the axial direction of the optical fiber 501. The inner surface of shield 700 has a constant inner diameter throughout. At the fiber-end of the shield, there is a radial gap 703 between the end of the optical fiber and the inner surface of the shield. At the window-end of the shield, the inner diameter of the shield is greater than the maximum diameter of output beam 505. A small axial gap 704 exists between the end of the shield 700 and the window 503.

The shield 700 restricts the local gas volume surrounding the optical path of the output beam 505. The shield 700 also axially restricts the gas flow through the apparatus, and substantially restricts radial flow from the remainder of the gas cell from reaching the optical path. In the embodiment shown, gas flows may only access the optical path through radial gap 703 and axial gap 704. The rate of contaminants crossing the optical path should therefore be reduced, relative to if the shield was not there at all.

The gaps 703 and 704 of the shield 700 allow for the gas in the optical path of the output beam 505 to fluidly communicate with the remainder of the gas cell, while restricting gas flows from crossing through the optical path. It is still desirable for gas to reach the optical path, as the generation of the broadband output by the light source is dependent on gas pressure.

As shown in Figure 7, radial gap 703 may be formed between the outer surface of the optical fiber, and the inner surface of the shield 700. The length of this gap in the axial direction may be configured to limit gas exchange to a chosen maximum rate. The cross-sectional size of the gap in the radial direction may also be configured to limit gas exchange to a chosen maximum rate.

The dimensions of the axial gap 704 between the end of the shield and the window may also be configured to limit gas exchange at this location to a chosen maximum rate.

The dimensions of the radial gap 703 and/or the axial gap 704 may be configured to reduce turbulent flow into the optical path region. It may not be feasible to achieve laminar flow at particular apparatus dimensions/pressures, but a reduction in turbulent character of the gas flow is still preferable.

The dimensions of radial gap 703 and axial gap 704 may be configured to achieve a particular gas flow effect due to their combined use. The gaps may be configured to have similar inflow/outflow rates, or to direct flow towards each other to prevent gas flows from crossing the optical path.

Alternatively, in this embodiment the axial gap 704 may not exist, and the end of the shield may abut or be sealed to the output window.

In other embodiments, the shape or dimensions of a radial gap and an axial gap may be configured, in isolation or in combination, to yield other desired gas flow properties. Desired gas flow properties may include particular flow topologies which prevent excessive turbulence from developing in or around the optical path.

Figure 8 shows a configuration of the light source according to another embodiment of the invention. The embodiment of Figure 8 comprises the same components as in Figure 7 aside from the shield 800. The light source comprises a gas cell 502 having a window 503, an optical fiber 501 optically coupled to the window 503 across a gap 509, and a shield 800. Output beam 505 is shown exiting the end of the optical fiber 501 and diverging as it travels to the window 503. The shield 800 is disposed around the end of the optical fiber 501, and extends in both axial directions, parallel to the optical fiber axis.

Shield 800 differs from shield 700 in that shield 800 abuts the end of the optical fiber 501, forming a seal around the entire outer circumference of the optical fiber 501. Consequently, in the embodiment shown in Figure 8, there is no gap between the shield 800 and the optical fiber 501 corresponding to the radial gap 703 of Figure 7. There is however an axial gap 804 in this embodiment such that the gas in the optical path can fluidly communicate with the gas in the remainder of the gas cell 502. Any of the optional features disclosed for axial gap 704 may equally apply to axial gap 804.

Shield 800 is rotationally symmetric with respect to the axial direction of the optical fiber 501, and a cross section of the shield 800 has been taken along the axial direction, showing the wall material 801 and the inner void 802.

Shield 800 also differs from shield 700 in that shield 800 has an inner surface with an inner diameter that varies with respect to the axial direction. The inner surface describes a generally frustroconical shape, with the larger end of the frustro-cone at the end of the shield adjacent the window 503.

The cross-section of the inner surface of the shield, shown in Figure 8 by the boundary between the wall material 801 and the inner void 802, follows the shape of the output beam 505. Therefore in this embodiment, the gas volume surrounding the optical path is more limited than in Figure 7. Reducing the gas volume surrounding the optical path in this manner may reduce the rate at which contaminants in the gas can cross the optical path and therefore accumulate.

It is important however that the shield itself does not intersect with, or otherwise obstruct the output beam 505, as this will affect the characteristics of the light output by the light source. It may be appropriate to implement a minimum spatial tolerance between the beam diameter and the inner diameter of the inner surface of the shield, indicated in Figure 8 by the gap between the output beam 505 and the boundary between the shield wall 801 and the inner void 802.

The shield 800 also restricts the extent to which turbulent gas flows from the remainder of the gas cell can access the optical path. As the optical fiber 501 forms a closed portion with the shield 800, the only route through which gas in the gas cell can fluidly communicate with the optical path is through gap 804. While this flow path is radial with respect to the optical path, the dimensions of gap 804 can be configured to limit the rate of flow, or the turbulent character of the flow, entering the optical path.

While the shields 700 and 800 of the two above embodiments have been disclosed separately, it may be desirable to combine features from both embodiments. For example, it may be desirable to have a shield with an axial gap 703 as in shield 700, in combination with a frustro-conical inner surface as in shield 800. The separate disclosure of the two embodiments is not intended to limit possible feature combinations for the light source of the present invention.

Further embodiments are disclosed in the subsequent numbered clauses:

1. A light source, comprising:

a gas cell having a window;

an optical fiber that is hollow and has an axial direction, an end thereof being enclosed within the gas cell and optically coupled to the window via an optical path;

a shield, disposed around the end of the optical fiber, and extending past the end of the optical fiber in the axial direction towards the window so as to limit the exchange of gas between the optical path and the remainder of the gas cell.

2. A light source according to clause 1, wherein the shield extends along the optical fiber for a given length, wherein the inner surface of the shield is offset from the circumference of the optical fiber, forming a gap.

3. A light source according any of the preceding clauses, wherein the gap between the optical fiber and the shield has a minimum cross-sectional area normal to the axial direction between $100 \mu m^2$ and $3 \ mm^2$.

4. A light source according to clauses 1 or 2 wherein the shield abuts or is sealed to the optical fiber.

5. A light source according to any of the preceding clauses, wherein an end of the shield abuts or is sealed with the window, or the gas cell surface containing the window.

6. A light source according to any of the preceding clauses, wherein the shield is disposed on the output end of the optical fiber.

7. A light source according to any of the preceding clauses, wherein the shield comprises silica, a metal, silicon, or other semiconductor.

8. A light source according to any of the preceding clauses, wherein the wall thickness of the shield is non-constant.

9. A light source according to any of the preceding clauses, wherein the shield is rotationally symmetric in the axial direction.

10. A light source according to any of the preceding clauses, wherein the inner surface of the shield has a non-constant inner diameter normal to the axial direction, optionally the inner diameter of the shield is larger than:

$$D_{min} = w_0 \sqrt{1 + (z/z_R)^2}$$

where $w_0$ is the mode field diameter at the end of the optical fiber, $z$ is the distance from the end of the optical fiber, and $z_R$ is the Rayleigh Length, and further optionally the inner surface of the shield defines a frustro-conical shape,

11. A light source according to clause 1, wherein the shield has a constant cross-section normal to the axial direction.

12. A light source according to any of the preceding clauses, wherein the gas in the gas cell comprises at least one gas selected from the group consisting of: helium, neon, argon, krypton, xenon, hydrogen, oxygen, nitrogen, other molecular gases and mixtures thereof.

13. A light source according to any of the preceding clauses, wherein the optical fiber is coupled to an optical source, the optical source comprising a pump laser.

14. A metrology device comprising the light source of any of the preceding clauses, wherein the light source is configured to generate light for projection onto a substrate.

15. The device of clause 14, wherein the metrology device is a scatterometer.

Although specific reference may be made in this text to the use of lithographic apparatus in the manufacture of ICs, it should be understood that the lithographic apparatus described herein may have other applications, such as the manufacture of integrated optical systems, guidance and detection patterns for magnetic domain memories, flat-panel displays, liquid-crystal displays (LCDs), thin film magnetic heads, etc. The skilled artisan will appreciate that, in the context of such alternative applications, any use of the terms "wafer" or "die" herein may be considered as synonymous with the more general terms "substrate" or "target portion", respectively. The substrate referred to herein may be processed, before or after exposure, in for example a track (a tool that typically applies a layer of resist to a substrate and develops the exposed resist), a metrology tool and/or an inspection tool. Where applicable, the disclosure herein may be applied to such and other substrate processing tools. Further, the substrate may be processed more than once, for example in order to create a multi-layer IC, so that the term substrate used herein may also refer to a substrate that already contains one or multiple processed layers.

While specific embodiments of the invention have been described above, it will be appreciated that the invention may be practiced otherwise than as described.

The descriptions above are intended to be illustrative, not limiting. Thus it will be apparent to one skilled in the art that modifications may be made to the invention as described without departing from the scope of the claims set out below.

**Claims**

1. A light source, comprising:

   a gas cell having a window;
   an optical fiber that is hollow and has an axial direction, an end thereof being enclosed within the gas cell and optically coupled to the window via an optical path;
   a shield, disposed around the end of the optical fiber, and extending past the end of the optical fiber in the axial direction towards the window so as to limit the exchange of gas between the optical path and the remainder of the gas cell.

2. A light source according to claim 1, wherein the shield extends along the optical fiber for a given length, wherein the inner surface of the shield is offset from the circumference of the optical fiber, forming a gap.

3. A light source according any of the preceding claims, wherein the gap between the optical fiber and the shield has a minimum cross-sectional area normal to the axial direction between $100 \mu m^2$ and $3 \, mm^2$.

4. A light source according to claims 1 or 2 wherein the shield abuts or is sealed to the optical fiber.

5. A light source according to any of the preceding claims, wherein an end of the shield abuts or is sealed with the window, or the gas cell surface containing the window.

6. A light source according to any of the preceding claims, wherein the shield is disposed on the output end of the optical fiber.

7. A light source according to any of the preceding claims, wherein the shield comprises silica, a metal, silicon, or other semiconductor.

8. A light source according to any of the preceding claims, wherein the wall thickness of the shield is non-constant.

9. A light source according to any of the preceding claims, wherein the shield is rotationally symmetric in the axial direction.

10. A light source according to any of the preceding claims, wherein the inner surface of the shield has a non-constant inner diameter normal to the axial direction, optionally the inner diameter of the shield is larger than:

$$D_{min} = w_0 \sqrt{1 + (z/z_R)^2}$$

   where $w_0$ is the mode field diameter at the end of the optical fiber, z is the distance from the end of the optical fiber, and $z_R$ is the Rayleigh Length, and further optionally the inner surface of the shield defines a frustro-conical shape,

11. A light source according to claim 1, wherein the shield has a constant cross-section normal to the axial direction.

12. A light source according to any of the preceding claims, wherein the gas in the gas cell comprises at least one gas selected from the group consisting of: helium, neon, argon, krypton, xenon, hydrogen, oxygen, nitrogen, other molecular gases and mixtures thereof.

13. A light source according to any of the preceding claims, wherein the optical fiber is coupled to an optical source, the optical source comprising a pump laser.

14. A metrology device comprising the light source of any of the preceding claims, wherein the light source is configured to generate light for projection onto a substrate.

15. The device of claim 14, wherein the metrology device is a scatterometer.

# Fig. 1

# Fig. 2

# Fig. 3

LA

SC1

SC3

0

-1          +1

CL          SC2          MT

# Fig. 4A

# Fig. 4B

# Fig. 5

# Fig. 6A

# Fig. 6B

# Fig. 7

# Fig. 8

Europäisches
Patentamt

European
Patent Office

Office européen
des brevets

## EUROPEAN SEARCH REPORT

Application Number

EP 19 19 4369

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | P. ST. J. RUSSELL ET AL: "Hollow-core photonic crystal fibres for gas-based nonlinear optics", NATURE PHOTONICS, vol. 8, no. 4, 28 March 2014 (2014-03-28), pages 278-286, XP55168268, ISSN: 1749-4885, DOI: 10.1038/nphoton.2013.312 * figure 4 * | 1-15 | INV.<br>G02F1/3501<br>G02F1/365 |
| A | US 2014/334763 A1 (HOLZER PHILIPP [DE] ET AL) 13 November 2014 (2014-11-13) * figure 1 * | 1-15 | |
| A | EP 2 942 847 A1 (MAX PLANCK GES ZUR FÖRDERUNG DER WISSENSCHAFTEN E V [DE]) 11 November 2015 (2015-11-11) * figure 1 * | 1-15 | |
| A | CA 2 961 847 A1 (LAKEHEAD UNIV [CA]) 23 September 2018 (2018-09-23) * figures 1,2 * | 1-15 | TECHNICAL FIELDS SEARCHED (IPC) |
| A | US 2018/156715 A1 (FRANCIS DANIEL [GB] ET AL) 7 June 2018 (2018-06-07) * abstract; figures 1-6 * | 1-15 | G02F<br>B01D |

The present search report has been drawn up for all claims

| Place of search | Date of completion of the search | Examiner |
|---|---|---|
| The Hague | 10 February 2020 | Gill, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 19 19 4369

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2020

| Patent document cited in search report | | Publication date | Patent family member(s) | | Publication date |
|---|---|---|---|---|---|
| US 2014334763 | A1 | 13-11-2014 | CA | 2849690 A1 | 08-11-2014 |
| | | | EP | 2802043 A1 | 12-11-2014 |
| | | | JP | 2014219677 A | 20-11-2014 |
| | | | US | 2014334763 A1 | 13-11-2014 |
| EP 2942847 | A1 | 11-11-2015 | DK | 2942847 T3 | 12-08-2019 |
| | | | EP | 2942847 A1 | 11-11-2015 |
| | | | EP | 3531514 A1 | 28-08-2019 |
| CA 2961847 | A1 | 23-09-2018 | NONE | | |
| US 2018156715 | A1 | 07-06-2018 | EP | 3295151 A1 | 21-03-2018 |
| | | | US | 2018156715 A1 | 07-06-2018 |
| | | | WO | 2016181100 A1 | 17-11-2016 |

EPO FORM P0459

For more details about this annex : see Official Journal of the European Patent Office, No. 12/82

**EP 3 786 700 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20100328655 A
- US 2011102753 A1
- US 20120044470 A
- US 20110249244 A
- US 20110026032 A
- EP 1628164 A
- US 20160161863 A
- US 20160370717 A1
- US 6961116 B
- US 2015261097 A1
- US 2009195768 A